# EUROPEAN PATENT SPECIFICATION

(11) **EP 1 525 587 B1**
(45) Date of publication and mention of the grant of the patent: **02.09.2009**
(21) Application number: 03751794.3
(22) Date of filing: 14.07.2003
(51) Int. Cl.: G21C 3/322, G21C 21/00, G21C 3/326

(54) **METHOD FOR MANUFACTURING A WATER ROD FOR A NUCLEAR REACTOR FUEL ASSEMBLY WITH TRANSITION SECTIONS WITH GRADUALLY INCREASING/DECREASING DIAMETER**
VERFAHREN ZUR HERSTELLUNG EINES WASSERROHRS ZUM EINSATZ IN EINEM KERNREAKTORBRENNSTABBÜNDEL MIT ÜBERGANGSABSCHNITTEN MIT KONTINUIERLICH ZUNEHMENDEM BZW. VERJÜNGTEM DURCHMESSER
PROCEDEE DE FABRICATION D'UN TUBE GRADUE D'EAU DE REFROIDISSEMENT POUR REACTEUR NUCLEAIRE

(30) Priority: 31.07.2002 US 209334
(43) Date of publication of application: 27.04.2005
(73) Proprietor: CSPC, Inc, El Cajon, CA 92020 (US)
(72) Inventor: GRAHAM, Charles, T., San Diego, CA 92109 (US); HOEHN, Curtis, Lakeside, CA 92040 (US); WALMSLEY, Steven, E., Vista, CA 92084 (US)
(74) Representative: Gill, Stephen Charles
(86) International application number: PCT/US2003/021877
(87) International publication number: WO 2004/012203

(56) References cited:
- EP-A- 0 859 369
- DE-A- 19 641 322
- DE-A- 19 715 961
- US-A- 6 105 413
- PATENT ABSTRACTS OF JAPAN vol. 1995, no. 09, 31 October 1995 (1995-10-31) & JP 07 140281 A (HITACHI LTD;OTHERS: 01), 2 June 1995 (1995-06-02)
- DATABASE WPI Section Ch, Week 200064 Derwent Publications Ltd., London, GB; Class M21, AN 2000-663018 XP002267279 & RU 2 150 342 C (VERKHNESADLINSK METAL PRODN ASSOC), 10 June 2000 (2000-06-10)

## Description

### Field of the Invention

The present invention relates to a method of making cooling water tubes for use in nuclear reactor cores, and more specifically cooling water tubes formed from a single piece of tubing.

### Background

In the present state of the art, cooling water tubes are used in nuclear reactor cores to help remove heat and to facilitate neutron flow. The known cooling water tubes are fabricated by assembling and welding together a number of different sized components and couplings. Such a tube is described and shown, for example, in US 5,553,108. The known cooling water tubes leave something to be desired because the welds must be carefully prepared and inspected in order to avoid failure when the tubes are in service. Further, the welding and inspection steps add to the cost of manufacturing the cooling water tubes.

EP 0 859 369 describes a process for producing a guide tube of a nuclear reactor fuel assembly which includes rolling a tubular blank on a pilger rolling mill. The process includes the steps of rolling portions of the tubular blank over a mandrel having multiple sections each section having a different outside diameter. The process provides a guide tube that has a constant outside diameter and different wall thicknesses along its length.

### Summary of the Invention

In accordance with the present invention, there is provided a method for manufacturing a cooling water tube according to claim 1.

### Brief Description of the Drawing Views

The foregoing summary as well as the following detailed description will be better understood when read in conjunction with the drawing figures in which:

Figure 1 is a fragmented perspective view showing a graduated cooling water tube; and

Figure 2 is a block diagram illustrating a method for manufacturing the graduated cooling water tube shown in Figure 1.

### Detailed Description of the Preferred Embodiment

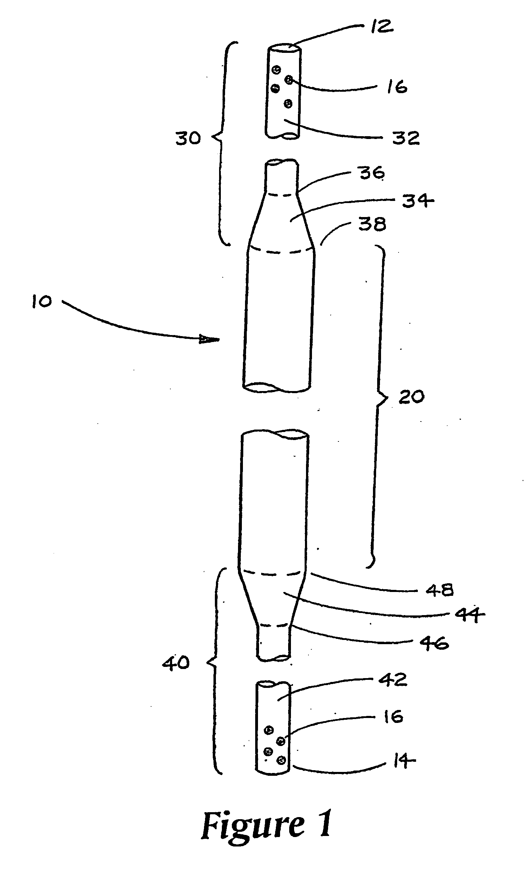

Referring to the drawing figures, and to Fig. 1 specifically, a cooling water tube is shown and designated generally by reference number 10. The tube 10 is formed of a single piece of cylindrical tubing. The tube 10 is configured to be installed in a generally vertical position in a fuel rod bundle within a nuclear reactor. Tube 10 is formed of any material that is substantially transparent to neutrons present in an operating nuclear reactor core. Preferably, the tube 10 is formed of a corrosion resistant alloy that permits passage of neutrons, such as zircaloy. A novel feature of the tube 10 is that it does not contain any welds, unlike the known cooling water tubes.

The tube 10 has a top end 12 and bottom end 14 that are adapted for connection to components in the nuclear reactor core. A plurality of apertures 16 are formed at the top end 12 and bottom end 14 to permit cooling water to flow into and out of the tube 10 as the water is heated in the reactor. More specifically, the apertures 16 at the bottom end 14 of the tube 10 are dimensioned and positioned to permit heated cooling water from the reactor to flow into the tube 10. The tube 10 is operable as a riser pipe and conveys the heated water upwardly toward the top end 12 of the tube. Water in the tube 10 stays out of direct contact with the fuel rods and therefore absorbs less heat as it rises. As a result, a substantial portion of the cooling water traveling up the tube remains liquid and does not vaporize. The apertures at the top end of the tube 10 are dimensioned and positioned to permit discharge of the cooling water from the tube's interior back out into the reactor. Cooling water that is released from the top end 12 of the tube in the vapor phase rises to the reactor's steam collection system. Cooling water that is discharged from the top end of the tube in the liquid phase replenishes the liquid cooling water outside of the cooling water tube. As a result, the cooling water tube permits more cooling water to remain in the liquid phase toward the top of the fuel rod bundle. This provides a more homogenous liquid phase in the fuel bundle to facilitate neutron flow in the reactor.

The structure of the cooling water tube 10 will now be described in more detail. The tube 10 is comprised of a single piece of tubing having a series of sections with different diameters. For ease of reference, the sections are visually separated from each other on Fig. 1 by dashed lines.

The arrangement and configuration of sections on the tube 10 may vary depending on a number of factors, including but not limited to the particular reactor installation and applicable safety standards. In Fig. 1, the tube 10 is shown as an elongate cylinder having a center section 20. A first end section 30 extends from the center section 20 in a first direction and is coaxial with the center section. A second end section 40 extends from the center section 20 in a second direction and is coaxial with the center section and the first end section 30.

The first end section 30 includes a first reduced section 32. The first reduced section 32 terminates at the upper end 12 of the tube 10. The diameter of the first reduced section 32 is significantly smaller than the diameter of the center section 20. Preferably, the ratio of the cross-sectional area of the first reduced section to the cross-sectional area of the center section is about 0.35 to about 0.38.

The first end section 30 further includes a first transition section 34 disposed between the first reduced section 32 and the center section 20. In particular, the first transition section 34 has a narrow neck portion 36 adjacent to the first reduced section 32 and a broader neck portion 38 adjacent to the center section 20. The diameter of the sidewall of the first transition section 34 increases from the narrow neck portion 36 to the broader neck portion 38. Preferably, the diameter of the sidewall increases linearly so that the first transition section 34 has the general shape of a truncated cone, as shown in Fig. 1. More preferably, the diameter of the sidewall of the first transition section 34 increases linearly such that a taper angle of about 11° to about 13° is defined between the sidewall and the longitudinal axis of the tube 10.

The second end section 40 includes a second reduced section 42. The second reduced section 42 terminates at the lower end 14 of the tube 10. The diameter of the second reduced section 42 is significantly smaller than the diameter of the center section 20. Preferably, the ratio of the cross-sectional area of the second reduced section 42 to the cross-sectional area of the center section is about 0.35 to about 0.38.

The second end section 40 further includes a second transition section 44 that is disposed between the second reduced section 42 and the center section 20. Like the first transition section 34, the second transition section 44 has a narrow neck portion 46 adjacent to the second reduced section 42 and a broader neck portion 48 adjacent to the center section 20. The diameter of the sidewall of the second transition section 44 increases from the narrow neck portion 46 to the broader neck portion 48. Preferably, the diameter of the sidewall increases linearly so that the second transition section 44 has the general shape of a truncated cone, as shown in Fig. 1. More preferably, the diameter of the sidewall of the second transition section 44 increases linearly such that a taper angle about 11°to about 13° is defined between the sidewall and the longitudinal axis of the tube 10.

The length of the individual sections in the tube 10 may vary depending on the particular reactor configuration and other factors related to the design of the reactor. In the preferred embodiment, the first end section 30 and second end section 40 are trimmed so that the axial distance from the first transition section to the trimmed end of the first end section, and the axial distance between the second transition section and the trimmed end of the second end section, are about 35.5-40.6 cm (14-16 inches) in length. Moreover, the finished tube 10 preferably has a total axial length of about 4.06 to 4.17 m (160 to 164 inches).

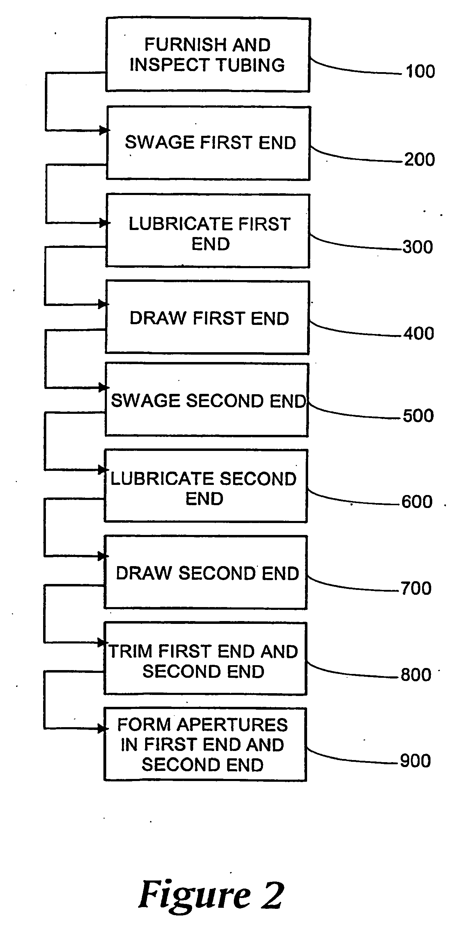

A unique feature of the cooling water tube 10, is that there are no seams or welds between the various individual sections described above. The absence of such seams and welds provides greater integrity of the tube structure and results from a novel process which will now be described with reference to Fig. 2.

Referring now to Fig. 2, a method for manufacturing a graduated nuclear cooling water tube in accordance with the present invention will be described. Individual steps of the method are represented in block diagram form, designated generally by reference numbers 100-900. In step 100, a length of cylindrical tubing having a uniform diameter is provided and inspected for any flaws or defects that could adversely affect its integrity. The tubing may be formed of any material that permits passage of neutrons therethough, but preferably, the tubing is formed of a corrosion resistant metal alloy that is substantially transparent to neutrons, such as zircaloy. The tubing has an outer diameter of preferably about 2.3-2.54 cm (0.9-1.0 inches) and a wall thickness of preferably about 0.737-0.838 mm (0.029-0.033 inches).

The preferred method for manufacturing the graduated nuclear cooling water tube is performed through a series of reductions in the cross-sectional area of the tubing provided in the step 100. Sections of the tubing undergo incremental reduction steps, rather than a single large reduction, to provide a gradual reduction in the cross-sectional area of the tubing, that minimizes the potential for buckling. The reduction steps are preferably performed at room temperature.

A first reduction is performed on the first end section of the tubing, in step 200. The first reduction step is performed to reduce the outer diameter of the first end section to an intermediate diameter that can be accommodated in a second reduction step. The present method may be performed using a variety of mechanical reduction steps and techniques. In the preferred method, the tubing is reduced first by swaging the end of the tube and then by drawing the tube through a die, as described in steps 200-400 in Fig. 2.

In step 200 of the preferred method, the extreme end of the first end section of the tube is swaged into a shape or "point" to permit the tube to be drawn into the drawing die. More specifically, a portion of the first end section is swaged to form an outside diameter that is slightly smaller than the smallest internal diameter of the bearing area in the drawing die. As such, the point forms a smooth transition that permits the tube to be drawn smoothly into the die without bucking or deforming.

Swaging provides a relatively fast way of reducing the outer diameter of the tubing down to a point that can be drawn smoothly into the die. It should be noted, however, that other suitable methods may be used to form the point. In the preferred method, the first end of the tube may be swaged in a series of passes into a swaging machine to form the point. The length of tubing that is swaged may be controlled in any manner. For example, the swaging machine may be fitted with a stop that is set at a specified position. Once set, the stop permits insertion of a limited length of the tube in the swaging machine. The stop engages the end of the inserted tube and prevents further insertion of the tube so that the tube cannot be swaged beyond a predetermined length. In the preferred method, the first end section is swaged for a length of about 7.6-15.2 cm (3-6 inches) from the end of the tubing.

Once the first reduction step is completed, the first end of the tubing is processed in a second reduction step. As stated earlier, the second reduction step is preferably completed by drawing the first end of the tube through a die. Prior to drawing the first end through the die, the end of the first end section of the tube is prepared for the drawing operation, as indicated in step 300. More specifically, the first end section is lubricated prior to insertion in the draw die. The lubricant is applied to facilitate smoother passage of the tubing through the drawing die. In step 300, the first end section of the tubing is coated with one or more coatings and lubricants having suitable viscosity for drawing the tube.

Once the intermediate diameter or point is achieved on the first end section, the first end section is drawn through a die, as indicated in the second reduction step 400. The second reduction step 400 further reduces the first end section and forms the first reduced section and first transition section on the cooling water tube, as discussed previously. Any drawing die may be used to form a desired geometric configuration on the first end section. Preferably, the die is a single tapered die. In addition, the die preferably has an approach angle adapted to form a cone-shaped first transition section having a taper angle of about 11°-13° between the tubing wall and an axis running longitudinally through the tube.

The first end section is drawn through the die for a predetermined distance measured from the extreme end of the first end section. Once the first end section is drawn through the predetermined distance, the tube is backed out of the die for inspection. The draw distance is controlled by any suitable means, such as a computerized draw controller on a draw bench that clamps onto the tube and pulls the tube through the die for a preset distance. The drawing step 400 may be performed as a series of incremental drawing steps on the first end section as necessary to achieve the desired shape and surface finish for the tube.

As stated earlier, the tubing has an outer diameter of preferably about 2.3-2.54 cm (0.9-1.0 inches) and a wall thickness of preferably about 0.737-0.838 mm (0.029-0.033) inches. In the preferred method where zircaloy tubing is used, and in many other cases, tubing having the above dimensions does not require internal supports during the drawing process. However, internal supports may be used in the present method as needed. For example, internal supports may be utilized where larger tube diameters or smaller tube wall thicknesses are present. Internal supports may comprise a mandrel, a plug, or other support suitable for a tube drawing operation.

Once the first end section 30 is drawn to the desired shape and dimension, the second end section 40, is reduced in the same manner. Like the first end section, the second end section is preferably swaged or pointed in step 500. The length of swaging on the second end section is controlled in the same manner as the first end section. The swaging of the second end section may also be performed as a series of reductions to achieve a point that will fit into the draw die.

After being swaged in step 500, the second end section 40 is prepared for drawing. As discussed earlier in connection with the reduction of the first end section, preparation of the second end section preferably includes lubricating the second end section (step 600).

Once the second end section is prepared for drawing, the second end section is drawn through the drawing die in step 700 to further reduce its cross-sectional area. In particular, the tube is drawn through the die up to a fixed distance and then backed out and inspected. Drawing may be repeated on the second end section to achieve the desired shape and dimension.

When the second end section is drawn through the die, the die produces a second transition section 44 between the second reduced section and the center section 20. It is desirable to control the draw length of the second end section to achieve a desired length for the center section. When the length of the center section must be restricted, the draw length for the second end section is controlled differently than for the first end section. In particular, the draw length for the second end section is not measured from the extreme end of the second end section. The reason for this is that the first end section may have a different axial length after swaging than the second end section after swaging. In many cases, this is due to variations in wall thickness in the two end sections, which lead to different amounts of metal flow during reduction. To control the length of the center section, the draw length for the second end section is measured from a benchmark location on the first end section. For example, a draw controller is preferably configured to pull the second end section through the die up to a point that is located at a specified distance from a point on the first transition section of the first end section.

After the second end section is drawn to the desired shape and dimension in step 700, the first end section and second end section are trimmed, in step 800. The first end section and second end section are preferably trimmed to remove pointed or swaged sections having diameters that were too small to be shaped by the die. The first end section and second end section may also be trimmed as necessary to achieve an overall desired length and configuration for the cooling water tube. For example, the first reduced section and second reduced section may be trimmed so that the first end section and the second end section have identical geometries. The desired length of the first and second end sections may be selected based on a number of factors, including but not limited to the particular reactor installation and applicable safety standards. In the preferred method, the length of the first end section is about 45.7 to 55.9 cm (18 to 22 inches). As with other dimensions on the tube, the finished length of the tube is selected depending on a number of factors, including the particular reactor installation and applicable safety standards. Preferably, the finished length of the tube is about 4.06 to 4.17 m (160 inches to 164 inches).

In step 900, one or more apertures are formed in the walls of the first end section 30 and second end section 40 to complete the cooling water tube. The apertures are sized and arranged so as to achieve a desired flow pattern and flow volume into and out of the tube when the tube is in operation. The apertures are formed by any suitable procedure. For example, apertures may be formed using a die punch, drilling or other known technique.

## Claims

1. A method for manufacturing a cooling water tube (10) for use in a nuclear reactor, said method comprising the steps of:
A. obtaining a length of cylindrical tubing (100) having a first end section (30) a second end section, (40) and a center section (20) that is between the first end section and the second end section;
B. reducing the diameter of the first end section (200, 300, 400) to form a first reduced section (32) and a first transition section (34) between the first reduced section and the center section;
C. reducing the diameter of the second end section (500, 600, 700) to form a second reduced section (42) and a second transition section (44) between the second reduced section and the center section;
D. trimming the first reduced section and the second reduced section (800) to provide the cooling water tube with an overall finished length; and
E. creating an opening (16) in the walls of each of the first reduced section and the second reduced section (900).

2. The method of claim 1 wherein the step of reducing the diameter of the first end section (200, 300, 400) and the step of reducing the diameter of the second end section (500, 600, 700) each comprise the step of performing a first reduction followed by a second reduction of said first end section and said second end section, respectively.

3. The method of claim 2 wherein the first reduction comprises swaging the first end section 200 and the second end section (500) to achieve an intermediate outside diameter in said first and second end sections.

4. The method of claim 3 wherein the second reduction comprises drawing the first end section (400) and the second end section (700) through a die.

5. The method of claim 4 wherein the die comprises a single taper die.

6. The method of claim 4 wherein the drawing step comprises the step of inserting a support in the tubing during the drawing step.

7. The method of claim 6 wherein the support is a mandrel or a plug.

8. The method of claim 1 wherein the step (800) of trimming the first end section and the second end section is performed such that the first end section has a geometry that is identical to the geometry of the second end section.

## Patentansprüche

1. Verfahren zur Herstellung eines Kühlwasserrohrs (10) zur Verwendung in einem Kernreaktor, wobei das Verfahren folgende Schritte umfasst:
A. Erhalten eines Stücks eines zylinderförmigen Rohrs (100) mit einem ersten Endabschnitt (30), einem zweiten Endabschnitt (40) und einem Mittelabschnitt (20), der zwischen dem ersten Endabschnitt und dem zweiten Endabschnitt vorliegt;
B. Reduzieren des Durchmessers des ersten Endabschnitts (200, 300, 400) zur Ausbildung eines ersten reduzierten Abschnitts (32) und eines ersten Übergangsabschnitts (34) zwischen dem ersten reduzierten Abschnitt und dem Mittelabschnitt;
C. Reduzieren des Durchmessers des zweiten Endabschnitts (500, 600, 700) zur Ausbildung eines zweiten reduzierten Abschnitts (42) und eines zweiten Übergangsabschnitts (44) zwischen dem zweiten reduzierten Abschnitt und dem Mittelabschnitt;
D. Zurichten des ersten reduzierten Abschnitts und des zweiten reduzierten Abschnitts (800) zur Bereitstellung eines Kühlwasserrohrs mit einer endgültigen Gesamtlänge; und
E. Erzeugen jeweils einer Öffnung (16) in der Wand des ersten reduzierten Abschnitts und des zweiten reduzierten Abschnitts (900).

2. Verfahren nach Anspruch 1, worin der Schritt des Reduzierens des Durchmessers des ersten Endabschnitts (200, 300, 400) und der Schritt des Reduzierens des Durchmessers des zweiten Endabschnitts (500, 600, 700) jeweils den Schritt des Durchführens einer ersten Reduzierung gefolgt von einer zweiten Reduzierung des ersten Endabschnitts bzw. des zweiten Endabschnitts umfassen.

3. Verfahren nach Anspruch 2, worin die erste Reduzierung das Spreizen des ersten Endabschnitts (200) und des zweiten Endabschnitts (500) umfasst, um einen Zwischenaußendurchmesser des ersten Endabschnitts und des zweiten Endabschnitts zu erhalten.

4. Verfahren nach Anspruch 3, worin die zweite Reduzierung das Ziehen des ersten Endabschnittes (400) und des zweiten Endabschnittes (700) durch ein Formwerkzeug umfasst.

5. Verfahren nach Anspruch 4, worin das Formwerkzeug ein verjüngtes Einzel-Formwerkzeug umfasst.

6. Verfahren nach Anspruch 4, worin der Schritt des Ziehens den Schritt des Einführens einer Stütze in das Rohr während des Schritt des Ziehens umfasst.

7. Verfahren nach Anspruch 6, worin die Stütze ein Dorn oder ein Stopfen ist.

8. Verfahren nach Anspruch 1, worin der Schritt (800) des Zurichtens des ersten Endabschnitts und des zweiten Endabschnitts so durchgeführt wird, dass der erste Endabschnitt eine Geometrie aufweist, die mit jener des zweiten Endabschnitts übereinstimmt.

## Revendications

1. Procédé de fabrication d'un tube d'eau de refroidissement (10) pour utilisation dans un réacteur nucléaire, ledit procédé comprenant les étapes de:
A. obtenir une longueur d'un tube cylindrique (100) ayant une première section d'extrémité (30), une seconde section d'extrémité (40) et une section centrale (20), qui se situe entre la première section d'extrémité et la seconde section d'extrémité;
B. réduire le diamètre de la première section d'extrémité (200, 300, 400) pour former une première section réduite (32) et une première section de transition (34) entre la première section réduite et la section centrale;
C. réduire le diamètre de la seconde section d'extrémité (500, 600, 700) pour former une seconde section réduite (42) et une seconde section de transition (44) entre la seconde section réduite et la section centrale;
D. ébarber la première section réduite et la seconde section réduite (800) pour réaliser le tube d'eau de refroidissement en une longueur totale finie; et
E. créer une ouverture (16) dans les parois de chacune parmi la première section réduite et la seconde section réduite (900).

2. Procédé selon la revendication 1, dans lequel l'étape de réduction du diamètre de la première section d'extrémité (200, 300, 400) et l'étape de réduction du diamètre de la seconde section d'extrémité (500, 600, 700) comprennent chacune l'étape consistant à exécuter une première réduction suivie d'une seconde réduction de ladite première section d'extrémité et de ladite seconde section d'extrémité, respectivement.

3. Procédé selon la revendication 2, dans lequel la première réduction comprend la retreinte de la première section d'extrémité (200) et de la seconde section d'extrémité (500) pour obtenir un diamètre extérieur intermédiaire dans lesdites première et seconde sections d'extrémité.

4. Procédé selon la revendication 3, dans lequel la seconde réduction comprend l'emboutissage de la première section d'extrémité (400) et de la seconde section d'extrémité (700) à travers une filière.

5. Procédé selon la revendication 4, où la filière comprend une filière conique unique.

6. Procédé selon la revendication 4, dans lequel l'étape d'emboutissage comprend l'étape consistant à insérer un support dans le tube durant l'étape d'emboutissage.

7. Procédé selon la revendication 6, dans lequel le support est un mandrin ou un bouchon.

8. Procédé selon la revendication 1, dans lequel l'étape (800) consistant à ébarber la première section d'extrémité et la seconde section d'extrémité est exécutée de telle sorte que la première section d'extrémité a une géométrie qui est identique à la géométrie de la seconde section d'extrémité.
